# EUROPEAN PATENT APPLICATION

(11) **EP 1 504 668 A1**
(43) Date of publication of application: **09.02.2005**
(21) Application number: 03077484.8
(22) Date of filing: 08.08.2003
(51) Int. Cl.: A21D 2/14, A23L 3/3508

(54) **Food preservative**

(71) Applicant: VERDUGT B.V., NL-4000 AB Tiel (NL)
(72) Inventor: Van Ooijen, Johannes Adrianus Cornelis, 3381 LB Giessenburg (NL)
(74) Representative: Nederlof, Etienne C.

(57) **Abstract**

The invention relates to a mixture of salts, comprising two or more salts of formulas M(X)₂ and M(X)(OH) wherein M is an alkaline-earth metal cation and X is an organic carboxylic acid anion, the alkaline-earth metal being one (or more) alkaline-earth metal(s) and the organic carboxylic acid being one (or more) organic carboxylic acid(s). Preferably, the alkaline-earth metal is calcium and the organic carboxylic acid is propionic acid.

The invention also relates to a solution or suspension, comprising water and dissolved or suspended therein said mixture of salts. And to a dough, comprising said mixture of salts in addition to flour, water, yeast and common salt. And to a method of making a bread product comprising baking said dough, and to a bread product obtainable by said method.

## Description

The invention relates to a food preservative, more especially a preservative for preserving bread products.

Propionic acid is known to be a food preservative. Therefore, propionic acid or any one of its salts, in particular calcium propionate, are often included in the dough used for making bread in order to extend the mould-free shelf life of the bread, particularly during the summer months. Unfortunately the presence of propionic acid in dough inhibits the fermentative activity of the yeast. If the fermentative activity of the yeast is diminished the time period of rising the dough to a certain extent is lengthened. Additional quantities of yeast therefore have to be used if the normal proof speed is to be maintained. The need to add these additional quantities is clearly undesirable.

In British patent 1 458 625 a solution for the above-mentioned problem is proposed. Said British patent 1 458 625 relates to a method of making bread comprising baking a dough that contains, uniformly dispersed throughout, propionic acid or a salt thereof encapsulated in material that melts or dissolves during the baking, such encapsulating material for example being an edible fat. According to British patent 1 458 625 a preferred salt is calcium propionate monohydrate.

It is important that when using a dough that contains a salt of a food preservative (for example propionic acid), for example calcium propionate, the food preservative is only slowly released from the salt, thereby balancing the need for long term preservation of the bread with a minimal inhibition of the fermentative activity of the yeast as contained in the dough.

An objective of the present invention is to provide a food preservative salt which has the above-mentioned characteristics.

It has now been found that the above-mentioned objective can be achieved by means of a mixture of salts comprising two or more salts of formulas M(X)₂ and M(X)(OH), wherein M is an alkaline-earth metal cation and X is an organic carboxylic acid anion.

Accordingly, the invention provides a mixture of salts, comprising two or more salts of formulas

M(X)₂ and M(X) (OH)

wherein M is an alkaline-earth metal cation and X is an organic carboxylic acid anion, the alkaline-earth metal being one (or more) alkaline-earth metal(s) and the organic carboxylic acid being one (or more) organic carboxylic acid(s).

An example of such mixture of salts is one wherein M is calcium and X is propionate, that is to say a mixture of salts, comprising two salts of formulas

Ca(propionate)₂ and Ca(propionate)(OH).

Further falling within the scope of the present invention is a mixture of salts, comprising five salts of formulas

M(X^{a})₂, M(X^{b})₂, M(X^{a}) (X^{b}), M(X^{a}) (OH) and M(X^{b}) (OH)

wherein M is an alkaline-earth metal cation and X^{a} and X^{b} are different organic carboxylic acid anions (for example: X^{a} is propionate and X^{b} is acetate), and any other mixture of salts wherein X is X^{a}, X^{b} and X^{c}, and so on.

Still further falling within the scope of the present invention is a mixture of salts, comprising four salts of formulas

M^{a}(X)₂, M^{b}(X)₂, M^{a}(X) (OH) and M^{b}(X) (OH)

wherein X is an organic carboxylic acid anion and M^{a} and M^{b} are different alkaline-earth metals (for example: M^{a} is calcium and M^{b} is magnesium), and any other mixture of salts wherein M is M^{a}, M^{b} and M^{c}, and so on.

Also falling within the scope of the present invention is any mixture of salts, comprising salts of formulas M(X)₂ and M(X)(OH) wherein M and X are as defined above, and wherein M is not one alkaline-earth metal (that is to say M is M^{a} and M^{b}, and so on) and X is not one organic carboxylic acid (that is to say X is X^{a} and X^{b}, and so on).

The total formula of said mixture of salts, comprising two or more salts of formulas M(X)₂ and M(X)(OH) wherein M is an alkaline-earth metal cation (i.e. M²⁺) and X is an organic carboxylic acid anion (i.e. X⁻), is

M(X)₂₋ₙ(OH)ₙ

wherein n is comprised in the range of 0-2 and n is not 0 or 2. Consequently, the total molar ratio of X to OH in said mixture of salts according to the present invention is determined by the formula (2-n)/n wherein n is comprised in the range of 0-2 and n is not 0 or 2.

According to the invention n in the formula (2-n)/n, derived from the total formula of the mixture of salts M(X)₂₋ₙ(OH)ₙ, may be comprised in the range of 0.1-1.9, preferably 0.5-1.5 and more preferably 0.8-1.2.

The invention also provides a mixture of salts, comprising two or more mixtures of salts as defined hereinbefore.

Preferably, the alkaline-earth metal in the above-mentioned mixture is calcium or magnesium, more preferably calcium. Preferably, the organic carboxylic acid in the above-mentioned mixture is a monocarboxylic acid, such as propionic acid or acetic acid, preferably propionic acid.

In a preferred embodiment of the invention, in the above-mentioned mixture the alkaline-earth metal is calcium and the organic carboxylic acid is propionic acid.

In a more preferred embodiment, in the above-mentioned mixture the alkaline-earth metals are calcium and magnesium and the organic carboxylic acid is propionic acid, such mixture thus comprising salts of formulas Ca(propionate)₂, Mg(propionate)₂, Ca(propionate)(OH) and Mg (propionate) (OH).

The invention also provides a solution or suspension comprising water and dissolved or suspended therein the above-mentioned mixture. Further, the invention provides a dough comprising the above-mentioned mixture in addition to flour, water, yeast and common salt. The amount of the mixture of salts in said dough may be comprised in the range of 0.1-10 wt.% based on flour weight, preferably 0.2-5 wt.%, more preferably 0.3-2 wt.%, and is most preferably about 0.5 wt.%.

Further, the invention provides a method of making a bread product, such as bread, comprising baking a dough comprising the above-mentioned mixture in addition to flour, water, yeast and common salt, and a bread product obtainable by this method.

In the commercial production of yeast leavened bread, a variety of additives are included in the dough formulation in addition to the basic ingredients which are flour, water, yeast, common salt and optionally sweetener. These additives are used to improve processability of the dough and to impart various characteristics to the baked product. One or more of these additives can also be incorporated in the dough according to the invention. Typical additives of this type include yeast nutrients to increase yeast activity and thereby increase product volume, oxidising agents to improve dough stability and improve grain and texture of the product, dough conditioning and strengthening agents to improve dough stability and processability of the dough, emulsifiers to increase softness and improve shelf life of the product, fungal enzymes to reduce mixing periods and improve machinability, mould inhibitors to inhibit growth of mould, bacteria, and other micro-organisms that impair shelf life and flavor of the product, calcium peroxide to bleach and whiten the grain of the bread and vitamin enrichment additives.

The two most widely used commercial processes for making yeast leavened bread are the sponge dough process and the continuous process. In the sponge dough process, a sponge batch is initially prepared by admixing a portion of the basic ingredients and some of the additives. This sponge batch is allowed to ferment for 4½ to 5 hours and is then mixed with the remaining ingredients and additives prior to baking. Typically, the sponge batch is formed by mixing together about 60 to 70% of the flour, about 40% of the water, all of the yeast and all the yeast food. After being allowed to ferment for about 4½ to 5 hours, the sponge batch is remixed with the remaining portions of the flour, water and other ingredients, such as sugar, salt, milk, fat, and additives, such as mould inhibitor, emulsifier and vitamin enrichment additives. The dough is allowed to relax in troughs for several minutes and is then divided, rounded, intermediately proofed, moulded into designated shapes, panned, final proofed and baked.

In the continuous process, a liquid brew is prepared by mixing most or all of the water, a large portion of the flour, all the yeast and all the yeast food. A major portion of the fermentation takes place in the brew. The brew is then transferred to a second mixer wherein it is mixed with other bread making ingredients, including fat, sugar, salt, and the remainder of the flour. The remaining additives are usually either added to the brew just prior to its transfer into the second mixer or introduced into the dough at some stage of development from a separate tank. After the dough is formed and developed in the second mixer, it is divided and thereafter handled in a conventional manner, such as rounding, moulding, panning, intermediate proofing, moulding, and/or panning, final proofing, and baking.

According to the invention the above-mentioned two processes for making bread can also be performed when using the dough according to the invention.

The invention is further illustrated with reference to the following Examples.

### Examples

Two mixtures of salts according to the invention, which will be referred to as Sample 4990 A and Sample 4990 C, were prepared as follows.

### Preparation of Sample 4990 A

To a slurry of 29.956 kg of calcium oxide (having a purity of 96.5%) in 75.000 kg of demineralised water 65.045 kg of propionic acid (having a purity of 99.8%) was added slowly under cooling in an icebath and under stirring. Then the cooling and stirring was continued for some time. The concentration of the final salt in the slurry was 20% (w/w) based on the slurry weight. Then the slurry was spraydried using a spraydry device and using an inlet temperature of 310°C and an outlet temperature of 120°C.

The obtained powder, herein referred to as Sample 4990 A, contained about 70 wt.% of calcium(propionate)₂ and about 30 wt.% of calcium(propionate)(OH).

### Preparation of Sample 4990 C

Sample 4990 C was prepared in the same way as described above with respect to Sample 4990 A, with the exception that the amount of propionic acid was 49.741 kg.

The obtained powder, herein referred to as Sample 4990 C, contained about 30 wt.% of calcium(propionate)₂ and about 70 wt.% of calcium(propionate)(OH).

Then a dough comprising the following ingredients was prepared:

| Ingredient | Amount (in grams) |
|---|---|
| Flour | 390 |
| Water | 260 |
| Fermipan brown (a dried yeast available from DSM, Netherlands) | 6.5 |
| HFCS (a high fructose corn syrup, available from ICS,USA) | 91 |
| Rotox (an oxidant available from ICS,USA) | 0.81 |
| Softase (a softener available from ICS, USA) | 6.5 |

Then a further additive was mixed with the above-mentioned dough:
For dough no. 1 according to the invention: 6.5 grams of Sample 4990 A.
For dough no. 2 according to the invention: 6.5 grams of Sample 4990 C.
For the comparative dough: 6.5 grams of standard calcium propionate, that is to say Ca(propionate)₂.
For the control dough: no further additive.

The four above-mentioned doughs were mixed for half a minute at slow speed in a McDuffy mixer and then for 8.5 minutes at high speed in the same mixer. The dough temperature was 26°C. The resting time was 2 minutes (at room temperature). After said resting time 420 grams of each dough was taken, and the doughs (each of 420 grams) were then rounded up softly by hand. The initial proofing time was 6 minutes (at room temperature), after which the doughs were moulded into a certain baking form. The final proofing time (at 40°C and a relative humidity of 80%) was determined, which appeared to be dependent on the type of further additive as contained in the four above-mentioned doughs. With "final proofing time" it is herein meant the time period of rising the dough, before baking, to a certain extent being a specific maximum volume. After this final proofing the doughs were baked for 20 minutes in an oven at 210°C (top oven temperature) and at 230°C (bottom oven temperature). The four bread products as obtained were then stored at room temperature (and at a relative humidity of 80%). During 1 month it was determined by means of visual observation whether or not moulds were formed on the four bread products.

The results as referred to above are set out in the following table.

| Dough or bread product | Final proofing time of dough | Mould formation on bread product |
|---|---|---|
| No. 1 according to the invention | 85 minutes | no |
| No. 2 according to the invention | 75 minutes | no |
| Comparative | 90 minutes | no |
| Control | 70 minutes | yes (after 11 days) |

From the above results it appears that when no calcium propionate or a mixture of salts according to the invention is used (as in the control dough), the final proofing time of the dough is indeed relatively short, but moulds were formed on the bread product already after 11 days of storage of the bread product.

Even though the final proofing times of the first three doughs as mentioned in the above table were longer than that of the control dough, after 1 month of storage of the bread products made from these first three doughs no moulds were formed.

More importantly, it appears from the above results that with the mixture of salts according to the invention (as contained in the above-mentioned doughs nos. 1 and 2 according to the invention) the final proofing times were shorter (5-15 minutes) than that of the comparative dough containing calcium propionate as the conventional food preservative salt. This has the advantage that the bread products can be made within a shorter time period and thus at lower cost. Further, if the final proofing time is kept at a constant value, then this has the advantage that less additional quantities of yeast have to be added since the mixture of salts according to the invention apparently reduces the fermentative activity of the yeast to a lesser degree than the conventional calcium propionate does (while at the same time the mixture of salts according to the invention slows down the formation of moulds on the bread product to the same degree). Therefore, it appears that with the mixture of salts according to the invention the food preservative, such as propionic acid as in these Examples, is only slowly released.

## Claims

1. A mixture of salts, comprising two or more salts of formulas
M(X)₂ and M(X) (OH)
wherein M is an alkaline-earth metal cation and X is an organic carboxylic acid anion, the alkaline-earth metal being one (or more) alkaline-earth metal(s) and the organic carboxylic acid being one (or more) organic carboxylic acid(s).

2. The mixture of salts according to claim 1, wherein n in the formula (2-n)/n, derived from the total formula of the mixture of salts M(X)₂₋ₙ(OH)ₙ, is comprised in the range of 0.1-1.9, preferably 0.5-1.5 and more preferably 0.8-1.2.

3. A mixture of salts, comprising two or more mixtures of salts as defined in claim 1 or 2.

4. The mixture of salts according to any one of the preceding claims, wherein the alkaline-earth metal is calcium or magnesium, preferably calcium.

5. The mixture of salts according to any one of the preceding claims, wherein the organic carboxylic acid is a monocarboxylic acid.

6. The mixture of salts according to claim 5, wherein the monocarboxylic acid is propionic acid or acetic acid, preferably propionic acid.

7. The mixture of salts according to any one of the preceding claims, wherein the alkaline-earth metal is calcium and the organic carboxylic acid is propionic acid.

8. The mixture of salts according to any one of the preceding claims, wherein the alkaline-earth metals are calcium and magnesium and the organic carboxylic acid is propionic acid.

9. A solution or suspension, comprising water and dissolved or suspended therein the mixture of salts according to any one of the preceding claims.

10. A dough, comprising the mixture of salts according to any one of the preceding claims in addition to flour, water, yeast and common salt.

11. The dough according to claim 10, wherein the amount of the mixture of salts is comprised in the range of 0.1-10 wt.% based on flour weight, preferably 0.2-5 wt.%, more preferably 0.3-2 wt.%, and is most preferably about 0.5 wt.%.

12. A method of making a bread product, comprising baking the dough according to claim 10 or 11.

13. A bread product, obtainable by the method of claim 12.
